(19) **Europäisches Patentamt**

**European Patent Office**

**Office européen des brevets**

(11) Numéro de publication: **0 035 940**
**B1**

(12) **FASCICULE DE BREVET EUROPEEN**

(45) Date de publication du fascicule du brevet:
27.06.84

(21) Numéro de dépôt: **81400347.1**

(22) Date de dépôt: **06.03.81**

(51) Int. Cl.³: **C 03 B 5/187, C 03 B 5/20**

(54) Procédé et four pour la production de verre fondu.

(30) Priorité: **11.03.80 FR 8005405**

(43) Date de publication de la demande:
**16.09.81 Bulletin 81/37**

(45) Mention de la délivrance du brevet:
**27.06.84 Bulletin 84/26**

(84) Etats contractants désignés:
**BE DE GB IT LU NL SE**

(56) Documents cités:
**FR - A - 2 261 987**
**GB - A - 624 946**
**US - A - 4 047 918**

(73) Titulaire: **SAINT-GOBAIN VITRAGE, Les Miroirs 18, avenue d'Alsace, F-92400 Courbevoie (FR)**

(72) Inventeur: **Burget, Paul, 11 avenue des Aubépines, B-4840 Welkenraedt (BE)**
Inventeur: **Zortea, Michel, 7 rue Just de Bretenières, F-71100 Chalon sur Saone (FR)**

(74)  Mandataire: **Eudes, Marcel et al, Saint-Gobain Recherche 39 Quai Lucien Lefranc, F-93304 Aubervilliers Cedex (FR)**

## Description

La présente invention a trait à un procédé et à un four du fusion pour la production de verre fondu homogène.

Comme on le sait, un four de fusion, constitué par un bassin allongé surmonté d'une voûte, comporte essentiellement deux parties: une zone de fusion et d'affinage à haute température et une zone de conditionnement à plus basse température, dite encore zone de braise, réunies, dans les fours modernes, par une partie à section étranglée, appelée corset. Dans la zone de fusion et d'affinage, on introduit en amont les matières premières formant la composition vitrifiable. Ces matières premières sont fondues au moyen de dispositifs de chauffauge tels que des brûleurs. Le verre fondu passe ensuite en aval, à travers le corset, dans la zone de conditionnement, où il est amené à une température appropriée, pour être prélevé par tirée, en vue d'opérations ultérieures de formage, d'étirage, de flottage ou, plus généralement, de façonnage. Afin de permettre le réglage de la température du verre, la zone de conditionnement est pourvue de dispositifs de refroidissement mais aussi de dispositifs de chauffage, par exemple de brûleurs.

Il ne suffit pas, toutefois, d'amener le verre prélevé à la température appropriée, il faut encore que ce verre soit homogène. Or des courants naissent dans le four, en raison des différences de température et de la tirée, et provoquent un brassage plus ou moins prononcé. Parmi les plus notables de ces courants, un courant aller, situé immédiatement à la partie supérieure du bain, s'écoule de la zone de fusion et d'affinage vers la zone de conditionnement, tandis qu'un courant de retour, situé sous le courant d'aller, s'écoule en sens inverse. Toutefois, l'ensemble de ces mouvements n'est pas toujours suffisant pour l'obtention d'un verre homogène. Dans un même échantillon, prélevé en sortie du four peuvent notamment exister des masses de verre ayant des durées de séjour dans le four comprises entre quelques dizaines d'heures et cinq à six semaines.

On a déja essayé de remédier à cet inconvénient en disposant dans le bain de verre fondu dudes barrages transversaux mécaniques ou thermiques, pour obliger les courants de verre à passer par des ouvertures ménagées en profondeur dans le bain de verre, en provoquant ainsi un brassage accru.

On a proposé également de séparer mécaniquement deux zones distinctes du bain de verre à l'aide de barrages flottants. Ceux-ci sont disposés suivant toute la largeur du bassin et leur fonction est soit de provoquer un brassage du bain, soit de diviser le four et deux zones successives.

On a aussi constaté qu'il y a intérêt à ne barrer que la partie médiane du bain de verre fondu, au moyen d'un barrage occupant seulement une partie de la largeur de ce bain et une partie seulement de sa hauteur. Ce barrage — disposé entre la zone de fusion et d'affinage et la zone de conditionnement et, en particulier, dans le corset, lorsque le four en comporte un — permet de dériver le courant central de verre jeune (de formation récente) qui, en l'absence du barrage, viendrait alimenter la veine nourricière à la tirée.

Des barrages constitués par une rangée d'agitateurs tournants disposés dans le corset d'un four à bassin et qui agissent sur le courant d'aller de verre fondu sont connus, en particulier par US 4 047 918 (HEITHOFF), brevet qui montre un barrage dont les extrémités sont proches et équidistantes des parois latérales du corset ou par US 3 989 497 (DICKINSON et al), brevet montrant un barrage symétrique du même type que celui de HEITHOFF, associé à un barrage flottant disposé en amont du précédent, les agitateurs brassant le verre du courant d'aller ayant été traité par le barrage flottant.

Pour sa part le brevet GB 624 946 montre un dispositif d'homogénéisation du courant de verre fondu parcourant le canal d'un avant-corps de four, canal ne comportant pas d'étranglement ou de corset et dans lequel des agitateurs sont disposés transversalement par paires non équidistantes des parois du canal. Ces agitateurs, munis de pas de vis hélicoïdaux, tournent autour d'axes verticaux dans un sens tel qu'ils s'opposent, lors de la mise en oeuvre du dispositif, au passage du verre fondu à travers l'espace le plus large séparant la paire d'agitateurs considérée de la paroi du canal. Il en résulte que chaque veine du courant circule plusieurs fois autour des agitateurs avant de trouver son chemin vers l'aval du canal et que le niveau du verre fondu est plus élevé en amont de la paire d'agitateurs qu'en aval, du fait de l'existence d'une composante de vitesse verticale descendante s'exerçant sur le verre fondu qui parcourt le canal sans créer de courant de retour.

On a toutefois constaté que l'action des barrages précités, si elle conduit à une sélection du verre, ne permet pas un brassage efficace de celui-ci. Or l'augmentation de la tirée spécifique des fours, pour des raisons économiques, ne permet plus de se satisfaire d'une sélection du verre, mais il faut lui ajouter une action de brassage des veines de verre d'ages différents. Pour les verres de couleur ou les verres spéciaux, cette action de brassage est encore plus nécessaire, car elle favorise une augmentation de la tirée, sans diminution de la qualité du verre.

La présente invention vise à proposer un procédé et un dispositif permettant d'accroître le brassage du verre fondu dans les fours de fusion, avec pour conséquence une meilleure homogénéité du verre à la tirée, qui rend possible une augmentation de la tirée spécifique, sans que la qualité du verre en soit altérée.

A cet effet, l'invention a pour objet un procédé pour la production de verre fondu dans un four de fusion équipé d'un bassin à corset contenant un bain de verre, où les constituants de ce verre sont fondus dans une zone de fusion-affinage et le verre fondu passe dans une zone de conditionnement adjacente dans laquelle il est prélevé, un courant d'aller du verre fondu, situé à la partie supérieure du bain, s'écoulant de la zone de fusion-affinage vers celle de conditionnement et un courant de retour, situé sous le courant d'aller, s'écoulant en sens inverse, ce procédé étant caractérisé en ce que l'on crée un courant de verre fondu transversal au courant d'aller qui s'oppose au passage direct du courant d'aller dans le corset et qui entraîne ledit courant vers un passage d'une largeur plus petite que celle du courant d'aller, passage situé à la limite commune des zones de fusion-affinage et de conditionnement et près d'un côté du bassin et en ce que l'on force le courant à travers le passage, une veine du courant d'aller, non entraînée par le courant transversal, s'écoulant librement au voisinage du côté du bassin opposé au côté du passage latéral, par un passage plus large que le passage.

Avantageusement, le passage forcé du courant d'aller a une largeur comprise entre 1 et 3% de la largeur du bain et le passage où s'écoule librement la veine du courant d'aller au voisinage du côté du bassin opposé au passage forcé latéral a une largeur comprise entre $1/12$ et $1/3$ de la largeur de bain.

L'invention a également pour objet un dispositif pour la mise en oeuvre de ce procédé, ce dispositif comprenant une rangée d'agitateurs tournant dans le même sens et disposés dans le corset qui sont immergés dans le courant d'aller du bain de verre fondu suivant un alignement transversal séparant la zone de fusion-affinage de la zone de conditionnement, un passage étant ménagé entre chaque extrémité de cet alignement et la paroi correspondante du bord du bassin, ce dispositif étant caractérisé en ce que le passage forcé a une largeur plus faible que l'autre passage.

Le passage de largeur la plus faible pourra être limité par la paroi du bassin ou avantageusement par un organe de barrage, par exemple par une plaque de matière réfractaire ou par une épingle refroidie.

Les dessins schématiques annexés illustrent l'invention. Sur ces dessins:

La fig. 1 est une vue en plan d'un four conforme à l'invention,

la fig. 2 est une coupe transversale de ce four au niveau du corset, avec les agitateurs vus en perspective,

la fig. 3 est une coupe longitudinale du four illustrant le mouvement du verre fondu dans les zones de fusion-affinage et de conditionnement,

la fig. 4 est une vue en perspective d'un agitateur,

la fig. 5 illustre les mouvements imprimés au courant du verre par les agitateurs au niveau du corset du bassin,

les fig. 6 et 7 sont deux striogrammes d'une glace préparée, respectivement, dans un four de fusion conforme à l'invention et dans un four classique.

Les fig. 8 et 9 sont des diagrammes illustrant les variations d'indice de réfraction d'une plaque de verre élaborée respectivement dans un four conforme à l'invention et dans un four classique.

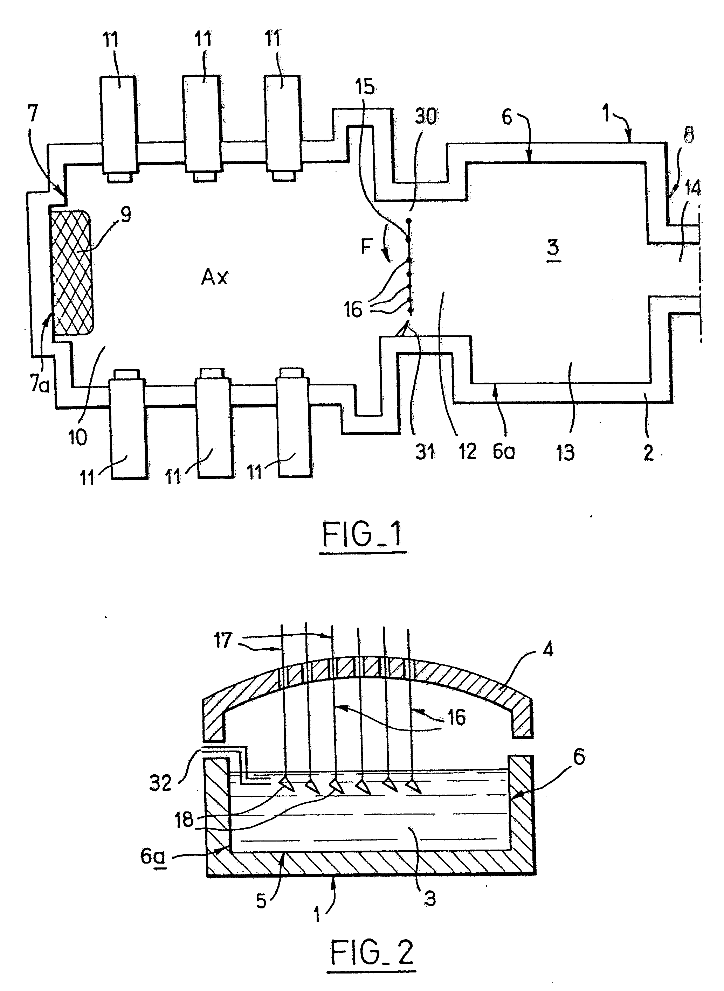

On se référera d'abord aux fig. 1 et 2, qui montrent un four de fusion 1, comprenant un bassin allongé 2 contenant un bain de verre fondu 3, et une voûte 4, surmontant le bassin et s'étendant au-dessus de lui, la voûte et le bassin étant constitués de matières réfractaires appropriées. Ce bassin comporte un fond 5, des parois latérales 6, 6a et des parois d'extrémité, respectivement amont 7 et aval 8.

La composition vitrifiable (ensemble des constituants du verre) est déversée, à l'aide d'un dispositif approprié non représenté, dans une niche d'enfournement 7a, située à l'extrémité amont 7 du bassin 2. Cette composition, d'abord étalée en couche 9 à la surface supérieure du bain, est fondue, puis affinée dans la zone de fusion-affinage 10 à haute température, pourvue de moyens de chauffage, par exemple de brûleurs 11. Le verre affiné passe ensuite, à travers un étranglement 12 appelé corset, dans une zone de conditionnement 13, dite de braise, où les températures du verre sont homogénéisées et abaissées à une valeur appropriée. Le verre est alors prélevé en vue d'opérations ultérieures de formage, d'étirage, de flottage ou, plus généralement, de façonnage, par un canal 14, communiquant avec l'extrémité aval 8 du four 1.

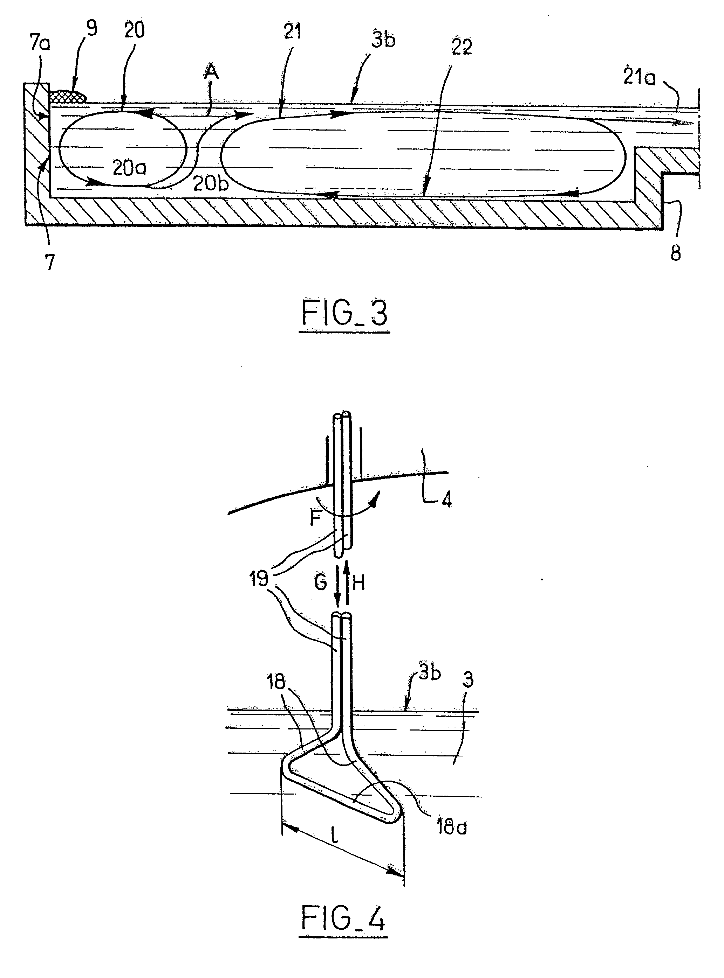

En disposant les brûleurs 11 comme indiqué schématiquement sur la fig. 1, on crée un point chaud A (fig. 1 et 3), situé dans la zone de fusion-affinage et connu des techniciens du verre sous l'appellation de point-source. De part et d'autre de ce point A, s'établissent deux courants de convection, dont le premier 20, dirigé en surface vers l'amont 7 du four et vers la niche d'enfournement 7a, a pour effet d'activer la fusion des mottes de composition 9. Celles-ci provoquent le refroidissement de ce courant, qui plonge dans le bain et se dirige en sole (courant 20a de la fig. 3), vers le point A, en se réchauffant, pour reformer le courant 20. La partie excédentaire 20b de ce courant est transférée en aval du point A, où elle se joint au second courant issu du point A (le courant 21), puis se dirige en surface vers l'aval 8 du four, où la tirée 21a est prélevée, alors que le reste du verre fondu forme le courant de retour 22, qui se dirige en sole vers le point A.

Des agitateurs 16, suspendus par leur extrémité supérieure 17 à la voûte 4 (fig. 2), tandis que leur extrémité inférieure 18 plonge dans le courant 21 du bain de verre fondu, sont disposés dans le corset 12, transversalement au bassin, suivant une ligne 15, avec deux passages libres, respectivement 30 et 31, à chacune des extrémités de la rangée (fig. 1), entre les bords du bassin et les agitateurs.

Ces agitateurs, entraînés en rotation dans le même sens autour de leur extrémité supérieure 17 (flèche F) à l'aide de moyens appropriés non représentés, sont par exemple constitués d'un tube 19 (fig. 4) avantageusement en acier, replié sur lui-même à l'extrémité supérieure des agitateurs, afin de pouvoir être alimenté en eau de refroidissement (flèches G et H). A l'extrémité inférieure 18 des agitateurs, le tube 19 présente une boucle 18a comprenant un segment de longueur l dans le plan horizontal.

Le fonctionnement de ce dispositif est le suivant:

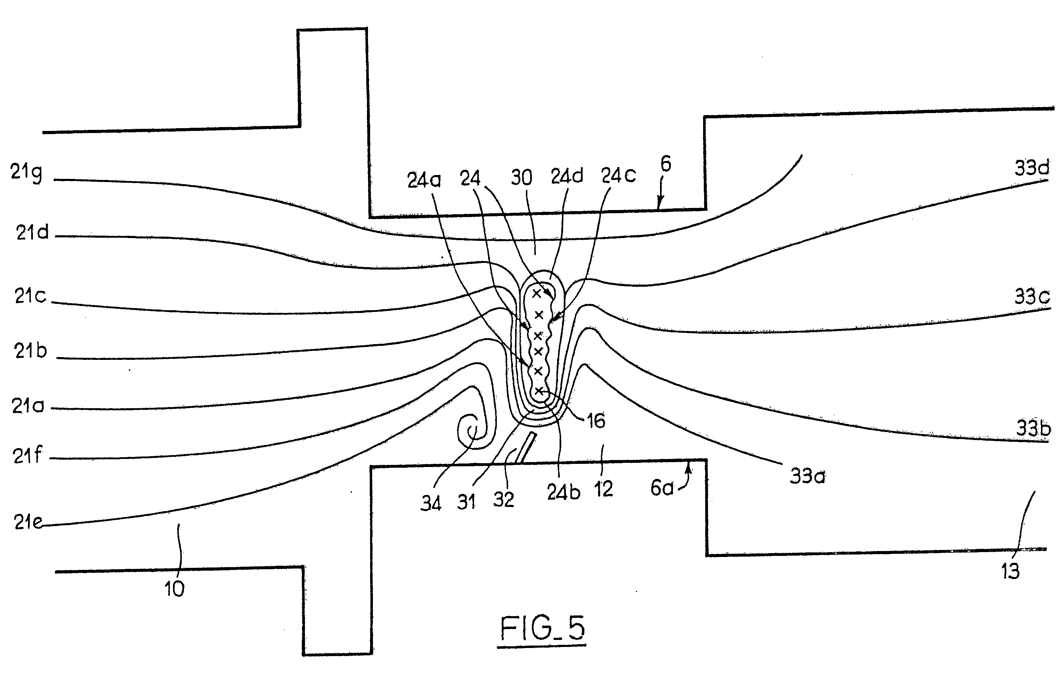

On commence par entraîner les agitateurs à des vitesses progressivement croissantes. A une vitesse déterminée, ces agitateurs créent, dans le verre fondu, un courant continu 24 (fig. 5), s'opposant au passage direct, dont l'existence peut être prouvée au moyen d'un indicateur de courant, par exemple, d'un palet de graphite (non représenté). Ce palet de graphite disposé sur le verre dans la zone de fusion-affinage décrit une courbe fermée en cheminant successivement sur le côté 24 a situé en regard de la zone de fusion-affinage 10, sur une partie terminale 24b de la surface du courant d'entraînement, sur le côté 24c situé en regard de la zone de conditionnement et sur l'autre partie terminale 24d de la surface du courant d'entraînement.

Deux passages libres sont ainsi réservés au verre, dont l'un 30 est situé entre la partie terminale 24d de la surface du courant d'entraînement et la paroi latérale 6 du bassin, l'autre, 31, plus étroit que le passage 30, étant situé entre la partie terminale 24b de la surface du courant d'entraînement et la paroi latérale 6a du bassin. Le passage 31 peut être avantageusement délimité par un barrage 32 qui limite la corrosion de la paroi correspondante du four. Ce barrage 32 peut être formé, par exemple, d'une épingle refroidie (fig. 2) ou d'une plaque en matière réfractaire (fig. 5). Son action en profondeur est limitée au courant 21.

On peut utiliser des agitateurs 16 tous identiques et disposer leur rangée 15 dissymétriquement dans le bassin, ces agitateurs tournant tous à des vitesses sensiblement identiques.

Alternativement, tout en veillant à assurer l'étanchéité du barrage, on peut régler les vitesses des agitateurs, par exemple au niveau de l'agitateur 16 le plus près de la partie terminale 24b, de manière à augmenter l'effet d'entraînement dans le passage 31.

Comme on le voit sur la fig. 5, les filets centraux 21a, b, c, d du courant d'aller sont entraînés dans le sens du mouvement du courant 24. Le verre des filets 21a, b, c, d traverse le passage forcé 31 et s'étale ensuite dans la zone de conditionnement, selon une disposition dont la partie centrale 33b, c, d conserve la même position relative qu'en amont du passage 31.

Les filets extrêmes 21e, f du courant d'aller situés du côté du passage étroit 31 s'enroulent en formant un vortex 34 et sont repris, en conséquence, par le courant de retour 22. Les autres filets extrêmes du courant aller, situés du côté du passage large 30, par exemple 21g, franchissent ce passage. Ces filets servent à stabiliser et à recentrer les filets 33b, c, d et isolent le barrage de la paroi 6 en évitant ainsi une usure accrue des réfractaires.

On remarquera toutefois que seuls les filets 33b, c, d, sont utilisés comme veine nourricière pour alimenter les machines de façonnage. Les autres filets 21g, 33a et 21e, f (comme mentionné ci-dessus pour ces filets 21e, f) sont repris par le courant de retour 22 et ne participent pas directement à la production.

La veine nourricière est donc uniquement formée de verre ayant subi un laminage très poussé entre le bord 6a du bassin, ou le barrage 32, et la partie terminale 24b de la zone d'entraînement. On donne en effet avantageusement au passage étroit 31 une largeur comprise entre 1% et 3% de la largeur du bain de verre, ou du bassin à l'endroit où sont situés les agitateurs, le passage 30 présentant une largeur comprise entre $1/12$ et $1/3$ de la largeur du bain. Les largeurs des passages latéraux 30 et 31 doivent d'ailleurs pouvoir être réglées en fonction des vitesses du verre dans la zone d'entraînement et de la largeur de la zone de prélèvement de la tirée.

Le laminage précité du verre dans le passage étroit 31 a pour effet d'accroître l'homogénéité ce qui facilite la diffusion chimique. L'homogénéisation progresse en conséquence rapidement, surtout si le verre est à une température égale ou supérieure à 1300°C.

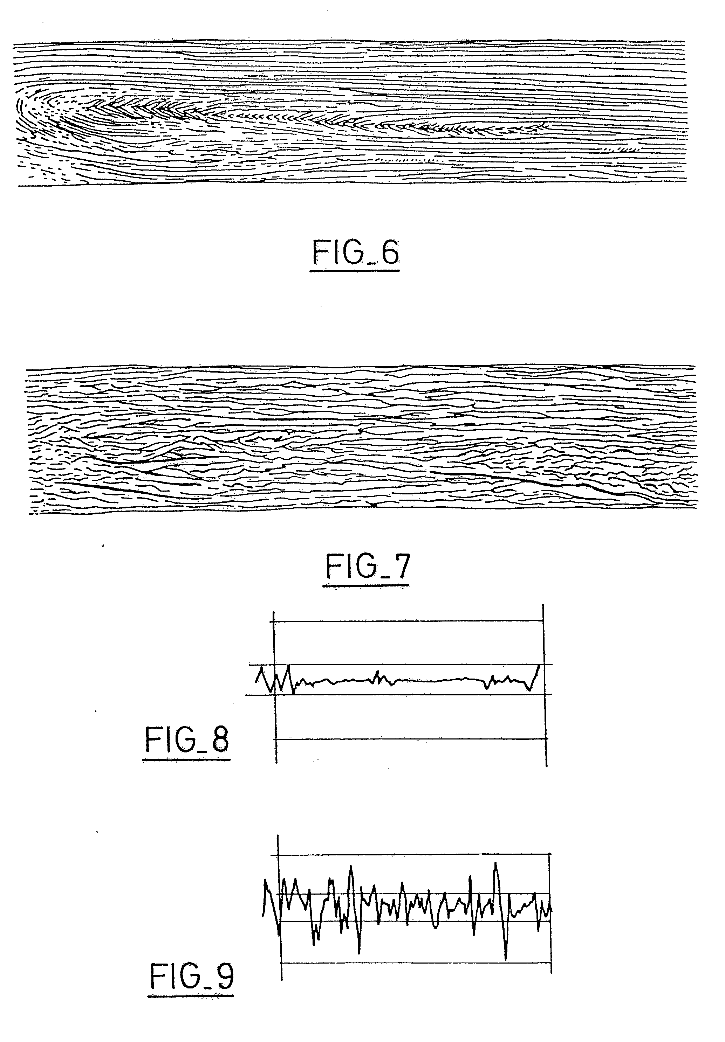

Pour établir la bonne qualité du verre obtenu, on a relevé des striogrammes pour de la glace obtenue dans un même four équipé d'agitateurs (fig. 6) ou n'en comportant pas (fig. 7). On voit que l'image striographique de la glace est beaucoup plus régulière lorsque les agitateurs sont utilisés qu'en l'absence d'agitateurs.

Afin d'obtenir des résultats plus démonstratifs, on a également relevé point par point les variations d'indice de réfraction sur une tranche de verre d'un millimètre d'épaisseur découpée perpendiculairement au sens d'étirage de la glace. On constate que les variations d'indice de réfraction sont bien moins fortes lorsque l'on utilise des agitateurs (fig. 8) que lorsqu'on n'en utilise pas (fig. 9).

Les agitateurs employés, au nombre de douze, étaient espacés de 300 mm les uns des autres et comportaient une partie 18a, d'une longueur l (fig. 4) égale à 340 millimètres. Ils plongeaient de 200 millimètres dans un bain de verre d'une profondeur de l'ordre du mètre. Ces agitateurs étaient animés d'une vitesse de rotation d'environ 22 tours par minute, pour une production de verre de l'ordre de 600 tonnen/jour.

L'invention a été décrite ci-dessus dans son application à un four à bassin rectangulaire muni d'un corset, mais le procédé et le dispositif selon l'invention peuvent naturellement s'appliquer à toute autre forme de four.

**Revendications**

1. Procédé pour la production de verre fondu dans un four de fusion (1) équipé d'un bassin à corset contenant un bain de verre (3), où les constituants de ce verre sont fondus dans une zone (10) de fusion-affinage et le verre fondu passe dans une zone (13) de conditionnement adjacente dans laquelle il est prélevé, un courant (21) d'aller du verre fondu, situé à la partie supérieure du bain, s'écoulant de la zone de fusion-affinage vers celle de conditionnement et un courant de retour (22), situé sous le courant d'aller, s'écoulant en sens inverse, ce procédé étant caractérisé en ce que l'on crée un courant de verre fondu (24) transversal au courant d'aller (21) qui s'oppose au passage direct du courant d'aller dans le corset (12) et qui entraine ledit courant (21) vers un passage (31) d'une largeur plus petite que celle du courant d'aller, passage situé à la limite commune des zones de fusion-affinage (10) et de conditionnement (13) et près d'un côté du bassin et en ce que l'on force le courant (21) à travers le passage (31), une veine (21g) du courant d'aller, non entrainée par le courant transversal (24), s'écoulant librement au voisinage du côté du bassin opposé au côté du passage latéral (31), par un passage (30) plus large que le passage (31).

2. Procédé suivant la revendication 1, caractérisé en ce que l'on effectue le passage forcé sur une largeur comprise entre 1 et 3% de la largeur du bain.

3. Procédé suivant la revendication 1, caractérisé en ce que la veine (21g) de courant s'écoule librement sur une largeur comprise entre $1/12$ et $1/3$ de la largeur du bain.

4. Dispositif de mise en oeuvre du procédé selon l'une des revendications 1 à 3, comprenant une rangée d'agitateurs (16) tournant dans le même sens et disposés dans le corset (12), qui sont immergés dans le courant d'aller du bain de verre fondu suivant un alignement transversal (15) séparant la zone de fusion-affinage (10) de la zone de conditionnement (13), un passage (30, 31) étant ménagé entre chaque extrémité de cet alignement (15) et la paroi correspondante du bord du bassin, caractérisé en ce que le passage forcé (31) a une largeur plus faible que l'autre passage (30).

5. Dispositif suivant la revendication 4, caractérisé en ce que le passage (31) de largeur la plus faible est limité par une paroi (6a) du bassin.

6. Dispositif suivant la revendication 4, caractérisé en ce que le passage de largeur la plus faible est limité par un organe (32) de barrage, par exemple par une plaque de matière réfractaire ou une épingle refroidie.

**Patentansprüche**

1. Verfahren zur Herstellung von geschmolzenem Glas in einem Schmelzofen (1), der mit einem eingeschnürten Becken enthaltend ein Glasbad (3) ausgerüstet ist, wo die Bestandteile dieses Glases in einer Zone (10) der Schmelzläuterung geschmolzen sind und die Glasschmelze in eine angrenzende Konditionierungszone (13) gelangt, in welcher das Glas entnommen wird, wobei ein vorlaufender Strom (21) der Glasschmelze im oberen Teil des Bades von der Läuterungszone in Richtung auf die Konditionierungszone strömt und ein rücklaufender Strom (22) unterhalb des vorlaufenden Stromes in umgekehrter Richtung strömt, dadurch gekennzeichnet, daß ein Strom der Glasschmelze (24) quer zum vorlaufenden Strom (21) erzeugt wird, welcher dem unmittelbaren Durchtritt des vorlaufenden Stromes in der Einschnürung (12) entgegenwirkt und diesen vorlaufenden Strom (21) zu einem Durchgang (31) mit einer kleineren Breite als die des vorlaufenden Stromes mitnimmt, wobei der Durchgang an der gemeinsamen Grenze der Läuterungszone (10) und der Konditionierungszone (13) und nahe einer Beckenseite gelegen ist, und daß der Strom (21) durch den Durchgang (31) gezwängt wird, wobei eine Stromader (21g) des vorlaufenden Stromes, welcher nicht durch den querverlaufenden Strom (24) mitgenommen wird, frei durch einen gegenüber dem Durchgang (31) größeren Durchgang (30) benachbart der Beckenseite strömt, welche der Seite des seitlichen Durchgangs (31) gegenüberliegt.

2. Verfahren nach Anspruch 1, dadurch gekennzeichnet, daß der forcierte Durchgang auf einer Breite bewirkt wird, welche zwischen 1 und 3% der Breite des Bades beträgt.

3. Verfahren nach Anspruch 1, dadurch gekennzeichnet, daß die Stromader (21g) des Stromes frei auf einer Breite zwischen $1/12$ und $1/3$ der Breite des Bades strömt.

4. Vorrichtung zur Durchführung des Verfahrens nach einem der Ansprüche 1 bis 3, mit einer Reihe von Rührern (16), die in derselben Drehrichtung umlaufen und in der Einschnürung (12) angeordnet sowie in den vorlaufenden Strom des Schmelzbades entsprechend einer quer gerichteten Flucht eingetaucht sind, welche die Läuterungszone (10) von der Konditionierungszone (13) trennt, wobei ein Durchgang zwischen jedem Ende dieser Flucht (15) und der zugeordneten Wand des Beckens vorgesehen ist, dadurch gekennzeichnet, daß der Zwangsdurchgang (31) eine Breite besitzt, die geringer als der andere Durchgang (30) ist.

5. Vorrichtung nach Anspruch 4, dadurch gekennzeichnet, daß der Durchgang (31) mit der geringeren Breite durch eine Wand (6a) des Beckens begrenzt ist.

6. Vorrichtung nach Anspruch 4, dadurch gekennzeichnet, daß der Durchgang mit der geringeren Breite begrenzt ist durch eine Sperreinrichtung (32), beispielsweise durch eine Platte aus hitzebeständigem Material oder durch eine gekühlte Schlange.

**Claims**

1. Process for production of molten glass in a melting furnace (1) provided with a tank having a corset containing a bath of glass (3) in which the constituents of the glass are melted in a melting and refining zone (10) and the molten glass passes into an adjacent conditioning zone (13) from which it is removed, a forward current (21) of molten glass, situated at the upper part of the bath, flowing from the melting and refining zone towards the conditioning zone, and a return current (22) situated below the forward current, flowing in the opposite direction, the process being characterized in that there is created a current of molten glass (24) transverse to the forward current (21) which opposes direct passage of the forward current in the corset (12) and which drives said current (21) towards a passage (31) having a width lesser than of the forward current, the passage being situated at the common limit of the melting and refining zone (10) and the conditioning zone (13) and close to a side of the tank, and in that the current (21) is forced to flow through the passage (31), a stream (21g) of the forward current, not driven by the transverse current (24), flowing freely in the neighbourhood of the side of the tank opposite the location of the lateral passage (31), through a passage (30) which is wider than the passage (31).

2. Process according to claim 1, characterized in that the forced passage is carried out over a width from 1 to 3% of the width of the bath.

3. Process according to claim 1, characterized in that the stream (21g) of the current flows freely over a width from $1/12$ to $1/3$ of the width of the bath.

4. Device for carrying out a process according to one of claims 1 to 3, comprising a line of agitators (16) rotating in the same direction and arranged in the corset (12), which are immersed in the forward current of the bath of molten glass along a transverse alignment (15) separating the melting and refining zone (10) from the conditioning zone (13), a passage (30, 31) being provided between each end of this alignment (15) and the corresponding wall at the edge of the tank, characterized in that the forced passage (31) has a width which is smaller than the other passage (30).

5. Device according to claim 4, characterized in that the passage (31) of lesser width is limited by a wall (6a) of the tank.

6. Device according to claim 4, characterized in that the passage of lesser width is limited by a barrier member (32), for example a plate of refractory material or a cooled pin.

FIG_1

FIG_2

## FIG_3

## FIG_4

FIG_5

FIG_6

FIG_7

FIG_8

FIG_9